# EUROPÄISCHE PATENTSCHRIFT

(11) **EP 2 058 574 B1**
(45) Veröffentlichungstag und Bekanntmachung des Hinweises auf die Patenterteilung: **24.04.2013**
(21) Anmeldenummer: 08016518.6
(22) Anmeldetag: 19.09.2008
(51) Int. Cl.: F16L 27/108, F16L 37/00

(54) **Flexible Manschette für Rohre**
Flexible cuff for pipes
Manchon souple pour tuyaux

(30) Priorität: 16.10.2007 DE 102007049726
(43) Veröffentlichungstag der Anmeldung: 13.05.2009
(73) Patentinhaber: Schenck Process GmbH, 64293 Darmstadt (DE)
(72) Erfinder: Schweizer, Peter, 63225 Langen (DE)

(56) Entgegenhaltungen:
- WO-A2-2009/158413
- DE-A1- 2 035 985
- DE-A1- 2 626 364
- DE-A1- 3 505 044
- DE-A1- 3 703 554
- DE-U1- 8 524 937
- DE-U1-202004 013 167
- FR-A- 1 128 607
- GB-A- 763 972
- US-A- 3 151 695
- US-A- 4 416 475

## Beschreibung

Die Erfindung betrifft eine flexible Manschette für einen Endabschnitt eines axial offenen Metallrohres vorgegebenen Außendurchmessers.

Zur kraftnebenschlußarmen und staubdichten Einbindung einer Differentialdosierwaage in eine Anlagenverrohrung werden häufig flexible Verbindungen eingesetzt. Die Montage erfordert Sachkenntnis und Sorgfalt. Zur Reinigung, zum Umbau oder Austausch der ganzen Waage müssen die flexiblen Verbindungen mindestens einseitig gelöst werden. Bei der wiederholten Montage kommt es durch Zeitdruck, mangelnder Sachkenntnis und widrigen Arbeitsbedingungen häufig zu einer fehlerhaften Montage, die den genauen und sicheren Betrieb der Waage stört.

Der Erfindung liegt daher die Aufgabe zugrunde, die Montage einer Verbindung zweier Rohrstücke zu beschleunigen und die Gefahr von Montagefehlern zu beseitigen oder wenigstens zu minimieren.

Dazu sieht die Erfindung eine flexible Manschette , dessen Innendurchmesser an den vorgegebenen Außendurchmesser des Metallrohres angepasst und der zur flächigen Anlage an der Außenwand des Endabschnittes vorgesehen ist, sowie eine ein axial wirkendes Andruckelement beherbergende Tasche zum dichtenden Unterfassen des Endabschnittes aufweist, wobei das Andruckelement zur axialen Dichtung vorgesehen ist.

Erfindungsgemäß sorgt der Rand bei seiner Anlage an den Endabschnitt für die erwünschte Zentrierung der Manschette bezüglich des Metallrohres und das Andruckelement bewirkt eine staubdichte Dichtung am Metallrohr. Die Erfindung bringt den Vorteil, daß die Verbindung der Manschette mit dem ersten Metallrohr ohne Benutzung eines Werkzeugs herstellbar und nach Belieben wieder lösbar ist. Die Manschette braucht nur von Hand über den Endabschnitt soweit axial geschoben zu werden, bis die Tasche den Endabschnitt unterfaßt und das Andruckelement die axiale Dichtung bewirkt. Zum Demontieren braucht die Manschette gegen die Wirkung des Andruckelementes lediglich axial von dem Ende abgezogen zu werden. Damit gelingt die Verbindung auch durch ungeübte Hilfskräfte, schnell und ohne weitere Hilfsmittel auch unter widrigen Umständen.

Soll mit dem genannten ersten Metallrohr ein zweites axial ausgerichtetes Rohr, das beispielsweise aus Kunststoff bestehen kann, mit Hilfe der erfindungsgemäßen Manschette verbunden werden, kann letztere im einfachsten Fall mit dem Endabschnitt des zweiten Rohres in herkömmlicher Weise, beispielsweise durch Verwendung bekannter Bandschellen, gekoppelt werden. Ist das zweite Rohr ebenfalls metallisch, ist für die Verbindung mit dem zweiten Rohr eine Manschette möglich, die an ihrem für das zweite Rohr vorgesehenen Ende erfindungsgemäß wie für das erste Metallrohr beschrieben ausgebildet ist.

Bei mangelhafter Montage herkömmlicher flexibler Manschetten wie zum Beispiel aus der DE 85 24937 U1 bekannt an dem ersten und zweiten Rohr können sich in der Manschette Falten, Knicke, Beulen oder Kreusel ausbilden, die einen unerwünschten Kraftnebenschluß erzeugen können. In besonderer Ausgestaltung der Erfindung weist die Manschette daher wenigstens einen Balg zwischen ihren beiden für die Verbindung mit dem ersten und zweiten Rohr vorhandenen Enden auf. Durch diese Maßnahme wird die Verbindung kraftnebenschlußfrei. Bevorzugt ist das Andruckelement ein in die Tasche einfügbares separates Bauteil, wofür es sich empfiehlt, die Tasche nach axial unten und/oder nach radial außen offen zu gestalten. Zweckmäßig ist das Andruckelement ein dem Außendurchmesser angepaßter Ringmagnet. Letzterer kann beispielsweise aus einem bevorzugt formsteifen Kunststoffring bestehen, in welchen mehrere über dessen Umfang verteilte Dauermagnete eingesetzt sind. Durch die kräftige magnetische Kopplung der Dauermagnete mit dem Endabschnitt des Metallrohres wird eine sehr zuverlässige staubdichte Dichtwirkung der Manschette mit dem Metallrohr erreicht. Es versteht sich, daß bei solcher Ausführungsform der Erfindung die Tasche in der Manschette axial unterhalb des Randes ausgebildet ist. Diese Ausführungsform ist besonders günstig bei hinreichend dickwandigen Metallrohren.

Bei dünnwandigen Metallrohren empfiehlt es sich für den Einsatz der Erfindung, an den Endabschnitt einen radial nach außen vorstehenden Ringflansch aus magnetisierbarem Material anzuformen. Hierbei ist eine Gestaltung der Erfindung zweckmäßig, wonach an der Manschette die Tasche derart neben dem Rand ausgebildet ist, daß bei der Verbindung der Manschette mit dem Endabschnitt die Tasche unterhalb des Ringflansches angeordnet ist.

In Weiterbildung der Erfindung wird das werkzeuglose Montieren und das werkzeuglose Lösen der Manschette dann erleichtert, wenn an den Rand oder die Tasche mehrere nach radial außen vorstehende Haltelaschen angeformt sind, an denen die Manschette in Richtung einer Verbindung mit oder eines Lösens von dem Metallrohr von Hand ergriffen werden kann. Die Manschette als Ganzes ist zweckmäßig flexibel und kann beispielsweise aus einem Elastomer bestehen.

Im Übrigen sind zweckmäßige Ausführungsformen der Erfindung in den abhängigen Ansprüchen angegeben. Die Erfindung wird nachstehend anhand der beiden in der beigefügten Zeichnung dargestellten Ausführungsformen im Einzelnen erläutert. Es zeigen:
Figur 1: einen schematischen Axialschnitt durch ein erstes und ein zweites Rohr, die mittels der erfindungsgemäßen Manschette axial verbunden sind,
Figur 2: eine schematische Draufsicht auf ein mit der Manschette nach Figur 1 benutztes Andruckelement, und
Figur 3 eine schematische Darstellung einer anderen Ausführungsform der Erfindung.

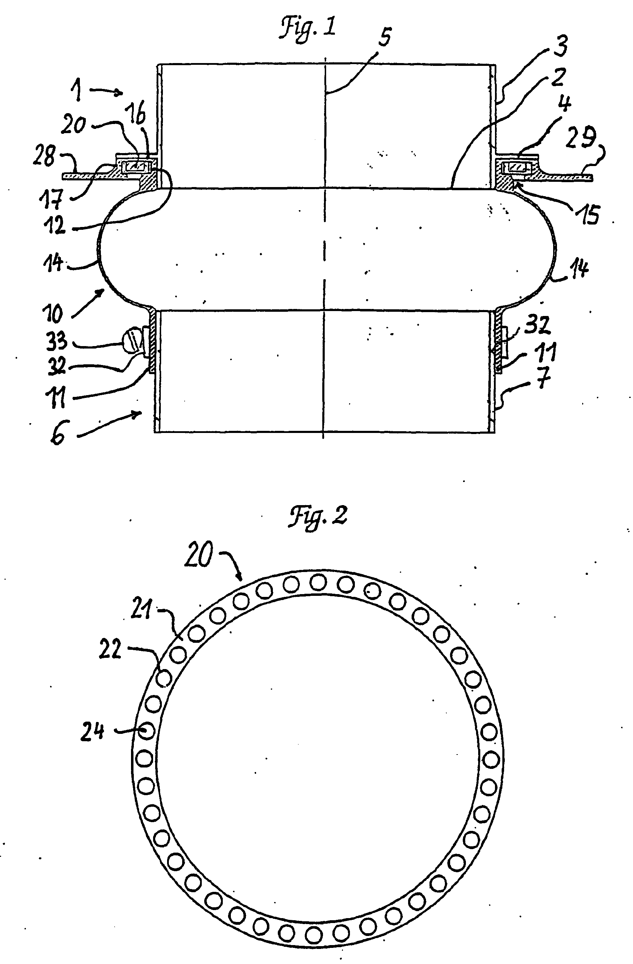

Ein erstes zylindrisches Rohr 1 vorgegebenen Außendurchmessers besitzt an seinem hier unteren offenen Ende 2 einen Endabschnitt 3, aus welchem ein Ringflansch 4 aus einem magnetisierbaren Werkstoff nach radial außen vorsteht. Das Rohr selbst kann aus einem nichtmagnetisierbaren Werkstoff (austenitischer Edelstahl mit guter Korrosionsbeständigkeit) bestehen und einen magnetisierbaren Endabschnitt 3 (ferritischer Edelstahl) besitzen. Auf die Achse 5 des Rohres 1 ist ein zweites zylindrisches Rohr 6 ausgerichtet, welches zum ersten Rohr 1 axial beabstandet und hier nach oben offen ist und an seinem offenen, auf das erste Rohr 1 zuweisenden Ende einen zweiten Endabschnitt 7 aufweist. Der Außendurchmesser des zweiten Rohres 6 ist in Figur 1 so dargestellt, daß er im Wesentlichen dem Außendurchmesser des ersten Rohres 1 gleicht, jedoch kann er größer oder kleiner sein als jener. Das zweite Rohr 6 kann aus Hartkunststoff oder auch wie das erste Rohr aus einem magnetisierbaren Material bestehen.

Das erste und das zweite Rohr sind durch eine flexible Manschette 10 aus einem Elastomer axial fluchtend verbunden. Das für das zweite Rohr 6 vorgesehene flache, ringförmige Ende 11 der Manschette 10 ist außen an dem Endabschnitt 7 durch eine mittels einer Schraube 33 gespannten Bandschelle 32 festgelegt.

Das für das Rohr 1 vorgesehene Ende der Manschette 10 weist einen axial erhabenen, dem Außendurchmesser angepaßten Rand 12 auf, der an der Außenseite des Endabschnittes unterhalb des Ringflansches 4 flächig anliegt. Radial außen neben dem Rand 12 ist in der Manschette 10 eine Tasche 15 von flachem, rechteckigen Querschnitt ausgebildet, welche nach unten offen ist und einen flachen Ringmagneten 20 beherbergt. An die Außenseite der Tasche 15 sind mehrere nach radial außen abstehende Haltelaschen 28, 29 angeformt.

Zwischen dem Ende 11 und dem Rand 12 ist die Manschette 10 balgenförmig hier in Form einer weiten radialen Ausbuchtung 14 gestaltet, um das Entstehen eines Kraftnebenschlusses zu verhindern.

Wie Figur 2 zeigt besteht der Ringmagnet 20 aus einem formsteifen Kunststoffring 21, dessen Außendurchmesser etwas kleiner ist als die radiale lichte Weite der Tasche 15 und in den von seiner Oberseite her zahlreiche in Umfangsrichtung gleich beabstandete Sackbohrungen eingetrieben sind. Eine dieser Sackbohrungen ist mit 22 bezeichnet. In jede dieser Sackbohrungen ist je ein zweckmäßig zylindrischer Dauermagnet 24 dauerhaft so eingesetzt, daß er über die Oberseite des Kunststoffringes 21 nicht vorsteht, die Oberseite deshalb praktisch eben bleibt. Die größte Magnetfelddichte des Dauermagneten 24 liegt in Figur 2 im Wesentlichen in der Papierebene, in

Figur 1 daher dicht unterhalb des Ringflansches 4. In dem in Figur 2 dargestellten Ausführungsbeispiel weist der Ringmagnet 20 insgesamt 40 Dauermagnete 24 auf, der Winkelabstand zweier benachbarter Dauermagnete 24 beträgt also etwa 9°.

Wenn der Ringmagnet 20 wie in Figur 1 gezeigt in die Tasche 15 so eingesetzt ist, daß die Oberseite mit den Dauermagneten 24 dem Ringflansch 4 benachbart ist und das von den Dauermagnaten 24 ausgehende Magnetfeld daher im Wesentlichen axiale Richtung hat, trennt den Ringmagneten 20 von dem Ringflansch lediglich eine Deckwand 16 der Tasche 15, die den Rand 12 mit der äußeren Begrenzungswand 17 der Tasche verbindet. Da die Deckwand 16 des Taschenkunststoffes das Magnetfeld praktisch nicht schwächt, wird die Manschette 10 mit großer, und wegen der Vielzahl der Dauermagnete auch mit in Umfangsrichtung relativ gleichmäßiger Haltekraft am Metallrohr gehalten.

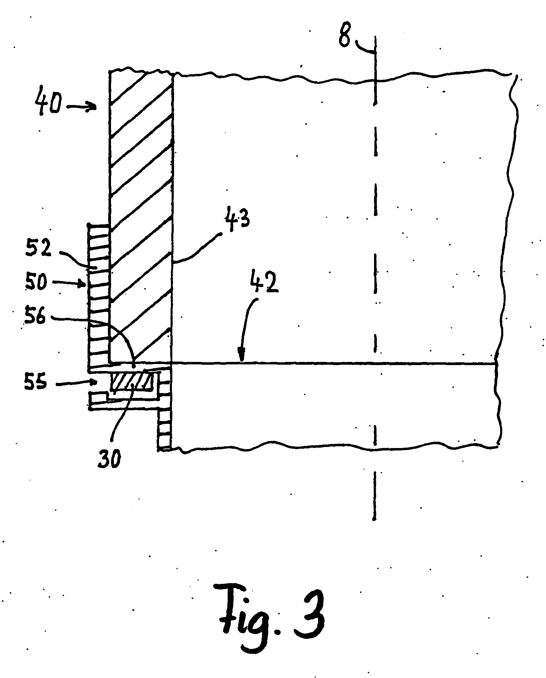

Die in Figur 3 erläuterte Ausführungsform der Erfindung ist vornehmlich für ein dickwandiges Rohr aus magnetisierbarem Metall geeignet. Dargestellt ist im halben Axialschnitt eines zur Achse 8 rotationssymmetrischen Rohres 40 sein Endabschnitt 43 mit dem nach unten offenen Ende 42. Die Manschette 50, die in Figur 3 mit dem Endabschnitt 43 verbunden ist, weist einen sich axial nach oben erstreckenden Rand 52 auf, dessen Innendurchmesser an den vorgegebenen Außendurchmesser des Rohres 40 angepaßt ist und der daher an der Außenwand des Endabschnittes 43 flächig anliegt. Der Rand 52 bewirkt deshalb ebenso wie der Rand 12 bei dem vorstehend anhand der Figuren 1 und 2 erläuterten Ausführungsbeispiel die erforderliche Zentrierung der Manschette 50 um die Achse 8. An das untere Ende des Randes 52 ist die Manschette 50 zu einer radial einspringenden Tasche 55 ausgeformt, deren Deckwand 56 an der freien Stirnfläche des Endabschnittes 43 von unten eng anliegt, wenn der Rand 52 ganz auf den Endabschnitt von Hand aufgeschoben ist. In der Tasche 55 ist ein dem Ringmagneten 20 baugleicher Ringmagnet 30 so beherbergt, daß die nicht dargestellten Dauermagnete des Ringmagneten 30 von unten an der Deckwand 56 anliegen. Durch das von den Dauermagneten ausgehende starke Magnetfeld entsteht durch diese Anordnung eine feste und damit dichtende Kopplung mit dem Endabschnitt 43. Im Übrigen ist die Manschette 50 so ausgeführt, wie das in Figur 1 erläutert ist.

Die Erfindung ist nicht auf die Anwendung von Rohren beschränkt, die aus magnetisierbarem Vollmaterial bestehen. Die beschriebene magnetische Kopplung kommt auch dann zustande, wenn das Rohr 1, 40 im wesentlichen aus Kunststoff besteht, in welchen magnetisierbare Bestandteile wie etwa magnetisierbare Metallfäden beispielsweise zur Verstärkung eingebettet sind. Die Stärke der magnetischen Kopplung hängt dann auch von der Dichte der Metallfäden vor allem im Bereich des Endabschnittes 3, 43 ab. Ferner liegt es Rahmen der Erfindung, den Ringmagneten 20, 30 dauerhaft in das Material der Manschette 10, 50 einzubetten. An den Rand 52 können nicht dargestellte radial nach außen abstehende Haltelaschen angeformt sein, etwa wie die Haltelaschen 28, 29 gemäß Figur 1.

## Patentansprüche

1. Flexible Manschette (10, 50) für einen Endabschnitt (3, 43) eines axial offenen Metallrohres (1, 40) vorgegebenen Außendurchmessers,
- welche einen axial vorstehenden ringförmigen Rand (12, 52) zum Anlegen an den Endabschnitt von außen,
- dessen Innendurchmesser an den vorgegebenen Außendurchmesser des Metallrohres (1, 40) angepasst und
- der zur flächigen Anlage an der Außenwand des Endabschnittes vorgesehen ist, aufweist,
**dadurch gekennzeichnet, dass** die flexible Manschette eine ein axial wirkendes Andruckelement (20, 30) beherbergende Tasche (15, 55) zum dichtenden Unterfassen des Endabschnitts aufweist,
- wobei das Andruckelement (20, 30) zur axialen Dichtung vorgesehen ist.

2. Flexible Manschette nach Anspruch 1, bei welcher das Andruckelement ein in die Tasche einfügbares separates Bauteil ist.

3. Flexible Manschette nach Anspruch 2, bei welcher die Tasche nach axial unten und/oder nach radial außen zum Einfügen des Andruckelementes offen ist.

4. Flexible Manschette nach Anspruch 1, bei welcher das Andruckelement dauerhaft in der Tasche eingebettet ist.

5. Flexible Manschette nach einem oder mehreren der vorstehenden Ansprüche, bei welcher das Andruckelement (20, 30) ein dem Außendurchmesser angepaßter Ringmagnet ist.

6. Flexible Manschette nach Anspruch 5, bei welcher der Ringmagnet ein Kunststoffring (21) ist, in welchen mehrere über dessen Umfang verteilte Dauermagnete (24) eingesetzt sind.

7. Flexible Manschette nach Anspruch 6, bei welcher der Kunststoffring formsteif ist.

8. Flexible Manschette nach einem oder mehreren der vorstehenden Ansprüche, bei welcher die Tasche (15) neben dem Rand (12) derart angeordnet ist, dass die Tasche bei der Verbindung mit dem Metallrohr unterhalb eines aus dem Endabschnitt (3) nach radial außen vorstehenden Ringflansches (4) angeordnet ist.

9. Flexible Manschette nach einem oder mehreren der vorstehenden Ansprüche, bei welcher an den Rand oder an die Tasche mehrere nach radial außen vorstehende Haltelaschen (28, 29) angeformt sind.

10. Flexible Manschette nach einem oder mehreren der vorstehenden Ansprüche mit einem Ende (11), das zur Verbindung mit einem weiteren Rohr (6) vorgesehen ist, wobei zwischen dem Rand (12) und dem Ende (11) ein Balg zweckmäßig in Form einer weiten radialen Ausbuchtung (14) ausgebildet ist.

## Claims

1. Flexible sleeve (10, 50) for an end section (3, 43) of an axially open metal pipe (1, 40) of predefined external diameter,
- which flexible sleeve (10, 50) has an axially projecting annular edge (12, 52) for bearing against the end section from the outside,
- the internal diameter of which annular edge (12, 52) is adapted to the predefined external diameter of the metal pipe (1, 40), and
- which annular edge (12, 52) is provided for full-surface contact with the outer wall of the end section, **characterized in that**, in order to engage under the end section in a sealing manner, the flexible sleeve has a pocket (15, 55) which accommodates an axially acting pressing element (20, 30),
- the pressing element (20, 30) being provided for axial sealing.

2. Flexible sleeve according to Claim 1, in which the pressing element is a separate component which can be inserted into the pocket.

3. Flexible sleeve according to Claim 2, in which the pocket is open axially to the bottom and/or radially to the outside in order to insert the pressing element.

4. Flexible sleeve according to Claim 1, in which the pressing element is embedded permanently in the pocket.

5. Flexible sleeve according to one or more of the preceding claims, in which the pressing element (20, 30) is a ring magnet which is adapted to the external diameter.

6. Flexible sleeve according to Claim 5, in which the ring magnet is a plastic ring (21), into which a plurality of permanent magnets (24) are inserted which are distributed over the circumference thereof.

7. Flexible sleeve according to Claim 6, in which the plastic ring is dimensionally stable.

8. Flexible sleeve according to one or more of the preceding claims, in which the pocket (15) is arranged next to the edge (12) in such a way that, during the connection to the metal pipe, the pocket is arranged below an annular flange (4) which projects out of the end section (3) radially to the outside.

9. Flexible sleeve according to one or more of the preceding claims, in which a plurality of retaining brackets (28, 29) which project radially to the outside are formed integrally onto the edge or onto the pocket.

10. Flexible sleeve according to one or more of the preceding claims having one end (11) which is provided for connection to a further pipe (6), a bellows expediently being configured between the edge (12) and the end (11) in the form of a wide radial bulge (14).

## Revendications

1. Manchon souple (10, 50) pour une partie d'extrémité (3, 43) d'un tube métallique ouvert axialement (1, 40) de diamètre extérieur prédéfini,
- lequel comprend un bord annulaire (12, 52) faisant saillie axialement pour l'application depuis l'extérieur contre la partie d'extrémité,
- dont le diamètre intérieur est ajusté au diamètre extérieur prédéfini du tube métallique (1, 40) et
- qui est prévu pour l'appui plan contre la paroi extérieure de la partie d'extrémité,
**caractérisé en ce que** le manchon souple comprend un évidement (15, 55) logeant un élément de pression (20, 30) agissant axialement pour l'engagement par le dessous de manière étanche avec la partie d'extrémité,
- l'élément de pression (20, 30) étant prévu pour l'étanchéification axiale.

2. Manchon souple selon la revendication 1, dans lequel l'élément de pression est un composant séparé pouvant être inséré dans l'évidement.

3. Manchon souple selon la revendication 2, dans lequel l'évidement est ouvert axialement vers le bas et/ou radialement vers l'extérieur pour l'insertion de l'élément de pression.

4. Manchon souple selon la revendication 1, dans lequel l'élément de pression est encastré de manière permanente dans l'évidement.

5. Manchon souple selon l'une quelconque ou plusieurs des revendications précédentes, dans lequel l'élément de pression (20, 30) est un aimant torique ajusté au diamètre extérieur.

6. Manchon souple selon la revendication 5, dans lequel l'aimant torique est un anneau en plastique (21) dans lequel sont insérés plusieurs aimants permanents (24) répartis sur sa périphérie.

7. Manchon souple selon la revendication 6, dans lequel l'anneau en plastique est de forme rigide.

8. Manchon souple selon l'une quelconque ou plusieurs des revendications précédentes, dans lequel l'évidement (15) est disposé près du bord (12), de telle sorte que l'évidement soit disposé, lors du raccordement avec le tube métallique, en dessous d'une bride annulaire (4) faisant saillie radialement vers l'extérieur à partir de la partie d'extrémité (3).

9. Manchon souple selon l'une quelconque ou plusieurs des revendications précédentes, dans lequel plusieurs languettes de retenue (28, 29) faisant saillie radialement vers l'extérieur sont formées sur le bord ou sur l'évidement.

10. Manchon souple selon l'une quelconque ou plusieurs des revendications précédentes, comprenant une extrémité (11) qui est prévue pour le raccordement avec un autre tuyau (6), un soufflet étant de manière appropriée réalisé entre le bord (12) et l'extrémité (11) sous la forme d'un renflement (14) radial large.
